# EUROPEAN PATENT APPLICATION

(11) **EP 1 517 568 A2**
(43) Date of publication of application: **23.03.2005**
(21) Application number: 04016859.3
(22) Date of filing: 16.07.2004
(51) Int. Cl.: H04Q 7/32

(54) **Apparatus and method for reducing power consumption in a mobile communication terminal**

(30) Priority: 29.08.2003 KR 2003060370
(71) Applicant: LG Electronics Inc., Seoul (KR)
(72) Inventor: Kim, Chan-Woo, Ilsan-Gu, Goyang, Gyeonggi-Do (KR)
(74) Representative: von Hellfeld, Axel, Dr. Dipl.-Phys.

(57) **Abstract**

Apparatus and method for reducing power consumption in a mobile communication device is accomplished by removing power from the display when the display is not visible to the user of the device. Specifically, contact between the face of the user and the device or between two or more portions of the device is detected to determine that the display is not visible to the user.

## Description

### BACKGROUND OF THE INVENTION

### 1. Field of the Invention

The present invention relates to a mobile communication terminal, and more particularly, to an apparatus and method for reducing power consumption in a mobile communication terminal.

### 2. Description of the Related Art

Mobile communication terminals are generally classified as bar-type, flip-type, folder-type, slide-type terminal, etc. according to their structures. Because it is advantageous to make a mobile communication device as small as possible, it is also advantageous to make the power source, typically a battery, as small as possible. The smaller the power source, the greater the concern regarding power consumption of the device.

Conventional mobile communication terminals, no matter which type, typically have a liquid crystal display (LCD). It is known that reducing the power consumption of the LCD is one approach to limiting power consumption of mobile communication terminals, thereby enabling use of a smaller power source.

It is known to reduce power consumption in a folder-type mobile communication terminal by turning off the LCD when the folder portion containing the LCD is closed since the user is then unable to view the LCD. The LCD power is turned on when the folder portion containing the LCD is unfolded to enable the user to view the LCD.

It is also known to turn off the backlight of the LCD for a specific time period. The user may set the specific time during which the backlight is turned off by programming the terminal. For example, the user may program the terminal to cut off power to the backlight between 7:00 AM and 5:00 PM when it is anticipated that daylight will not require the backlight to be on.

A sensor may be provided in the device to adjust backlight intensity based on the amount of external light present. For example, a photo-sensor built into the terminal may detect the intensity of surrounding illumination. Power would be provided to the backlight when it is dark or the user is in darkened places such as an underground parking garage or inside a dark building. The backlight would not be powered or it would be dimmed in daylight or when the user is in an illuminated place.

In a typical-slide type mobile communication device, even when the slide portion is closed, a portion covering the LCD may be transparent to enable the user to view the LCD. When the slide portion is closed, a backlight may be turned on while the LCD is turned off in order to reduce power consumption. When the slide portion is opened, the backlight is turned off and the LCD is turned on.

For a conventional mobile communication terminal of any type, power to the LCD may be cut off when the user is using the terminal for voice communication since the user's ear is usually in contact with a speaker unit and, therefore, the user is unable to see the LCD. Furthermore, if the LCD is located in a portion of the device near the speaker, heat generated by the LCD when it is powered may cause user discomfort during a long telephone call.

An infrared sensor may be used to transmit a signal of a specific frequency and the corresponding reflective signal sensed, thereby indicating whether the user has the phone next to his face. However, the infrared sensor may also cause discomfort to the user during a long call. Additionally, the inclusion of an infrared sensor raises production costs of the mobile communication terminal.

Therefore, there is a need for an apparatus and method that can detect when the user of a mobile communication terminal cannot view the LCD such that power to the LCD may be removed and power consumption of the device reduced without the use of an infrared sensor. The present invention meets these and other needs.

### SUMMARY OF THE INVENTION

The present invention is directed to an apparatus and method for reducing power consumption of the display of a mobile communication device. Specifically, the invention is directed to an apparatus and method for detecting when the user of the device cannot view the display, the apparatus and method obviating one or more disadvantages of the apparatus and methods known in the art.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, in a mobile communication device having a display and enabling voice functions, an apparatus for reducing display unit power consumption according to the present invention includes an apparatus and method for determining when there is contact between the face of a user and a portion of the device or, in the case of a folder-type device, between two or more portions of the device.

In one aspect of the invention, means for determining that the display of a mobile communication device is not visible to the user and means for cutting off power to the display when the display is not visible to the user are provided. The means for determining that the display is not visible to the user detects physical contact with at least one portion of the device.

It is contemplated that any type of contact sensor may be utilized as the means for determining that the display is not visible to the user. Preferably, the contact sensor is a pneumatic sensor, a piezoelectric sensor, an optical sensor, a sensor that utilizes VLSI technology, or a mechanical sensor.

It is contemplated that physical contact may be sensed either between the user and a portion of the device or between two or more portions of the device. Sensing contact between the user and the device allows power to the display to be cut off when the user is using the device for telephonic communication. Sensing contact between two or more portions of the device allows power to be removed from the display of, for example, a folder-type device when the folder portion is closed.

It is contemplated that the means for determining that the display is not visible to the user may include a disable function that, when activated, prevents physical contact from being sensed. Preferably the disable function is a manual switch that may be activated by the user in order to apply power to the display and avoid cutting off power to the display when contact may be inadvertently made with the means for determining that the display is not visible to the user, thereby resulting in power to the display being cutoff even when the display is visible to the user.

In another aspect of the invention, a mobile communication device is provided, the device having a display, a sensing unit and a controller. The sensing unit is adapted to sense physical contact with at least one portion of the device in order to detect when the display is not visible to the user of the device. The controller is adapted to cut off power to the display when the sensing unit detects physical contact with at least one portion of the device.

It is contemplated that the sensing unit may be any type of contact sensor. Preferably, the sensing unit is a pneumatic sensor, a piezoelectric sensor, an optical sensor, a sensor that utilizes VLSI technology, or a mechanical sensor.

It is contemplated that the invention may be applied to any type of mobile communication device. It is further contemplated that the sensing unit may sense physical contact between the user and a portion of the device, thereby allowing power to the display to be cut off when the user is using the device for telephonic communication.

If the device is a mobile communication device, such as a folder-type device or slider-type device, that has a configuration in which the display is not viewable even when not being used for telephonic communication, the sensing unit may sense physical contact between two or more portions of the device. Sensing contact between two or more portions of the device allows power to be cut off to the display of such a device when, for example, the folder portion of a folder-type device is closed.

It is contemplated that the sensing unit may be located on any portion of the device, preferably a portion of the device that is in contact with the face of a user when the device is used for telephonic communication. If is further contemplated that the display may be of any type, preferably an LCD.

It is contemplated that the sensing may include a disable function that, when activated, prevents the sensing unit from detecting physical contact. Preferably the disable function is a manual switch that may be activated by the user in order to apply power to the display and avoid cutting off power to the display when contact may be inadvertently made with the sensing unit when the display is visible to the user.

In another aspect of the present invention, a method of reducing power consumption of a mobile communication device having a display includes determining that the display is not visible to the user of the device and cutting off power to the display. Determining that the display is not visible to the user of the device includes detecting physical contact with at least one portion of the device.

It is contemplated that the detection of physical contact may be between the user of the device and a portion of the device. It is further contemplated that physical contact between two or more portions of the device may be detected if, for example, the device is a folder-type device that generates contact between two or more portions upon closing.

Various methods of detecting physical contact may be utilized. If a pneumatic sensor is included in the device, a variation in air pressure may be detected. If a piezoelectric sensor is included in the device, current flow may be detected. If an optical sensor is included in the device, a variation in the reflection angle of light may be detected. If VLSI technology is utilized, a variation in voltage may be detected.

It is contemplated that the method may include not detecting physical contact and not cutting off power to the display when a disable function is activated. Preferably the disable function is a manual switch that may be activated by the user in order to apply power to the display and avoid cutting off power to the display when contact may be inadvertently made with the device when the display is visible to the user.

It is to be understood that both the foregoing general description and the following detailed description of the present invention are exemplary and explanatory and are intended to provide further explanation of the invention as claimed.

Other features and advantages of the present invention will become apparent from the following detailed description taken in conjunction with the accompanying drawings, which illustrate, by way of example, the principles of the invention.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. Features, elements, and aspects of the invention that are referenced by the same numerals in different figures represent the same, equivalent, or similar features, elements, or aspects in accordance with one or more embodiments.
FIG. 1 is a perspective view of a mobile communication device according to one embodiment of the present invention.
FIG. 2 is a perspective view of a user using the mobile communication device illustrated in FIG. 1 for telephonic communication.
FIG. 3 is a block diagram of an apparatus for reducing power consumption of a display of a mobile communication device according to one embodiment of the present invention;
FIG. 4 is a cross-sectional view of a conventional pneumatic contact sensor.
FIG. 5 is a cross-sectional view of a conventional piezoelectric contact sensor.
FIG. 6 is a cross-sectional view of a conventional optical contact sensor.
FIG. 7 is a cross-sectional view of a conventional contact sensor utilizing VLSI technology.
FIG. 8 is a flowchart of a method for reducing power consumption of a display of a mobile communication device according to the present invention.

### DETAILED DESCRIPTION OF THE PREFERRED EMBODIMENTS

The present invention relates to an apparatus and method for reducing power consumption of the display of a mobile communication device. Although the present invention is illustrated with regard to a folder-type mobile communication device, it is contemplated that the present invention may be utilized with any mobile communication device. It is further contemplated that the present invention may be utilized whenever it is desired to reduce power consumption in an electrical device by removing power from a portion of the device under conditions that can be determined by physical contact with the device.

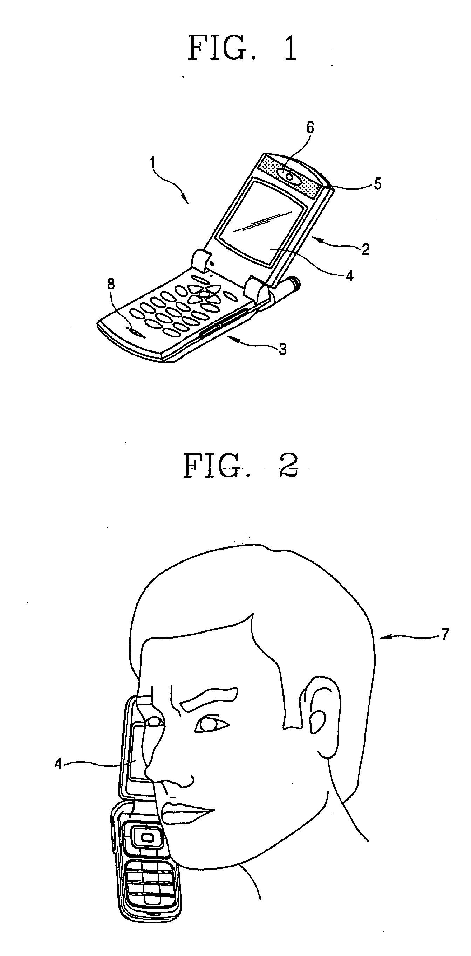

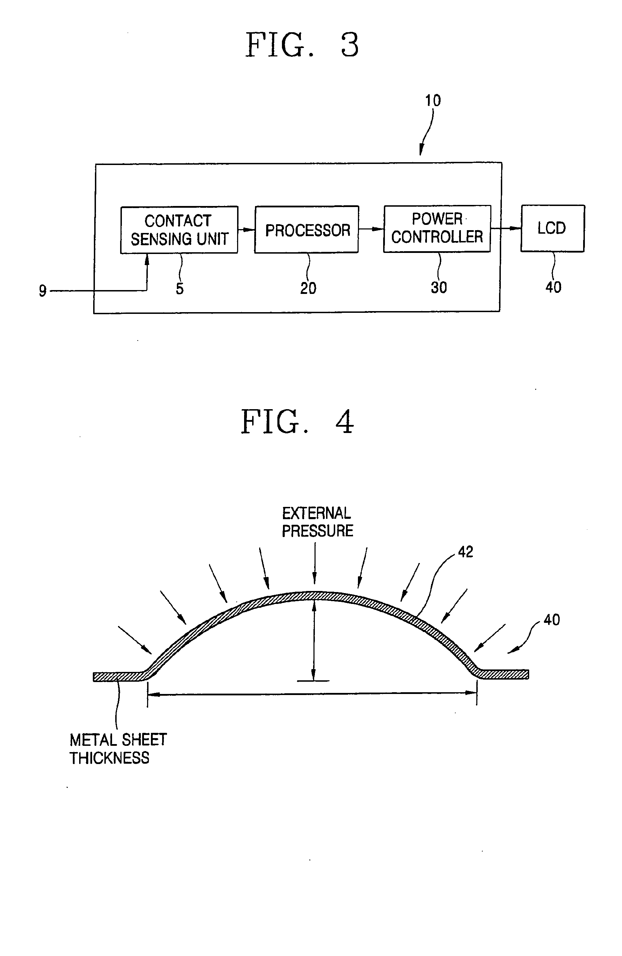

Referring to FIG. 1, one embodiment of the present invention is illustrated. The folder-type mobile communication device 1 includes a folder portion 2 and main body portion 3. The folder portion 2 includes a display 4 and a sensing unit 5 located in a speaker unit 6. The sensing unit 5 is adapted to detect physical contact. A power supply unit (not shown) is included in the device to provide power to the display 4. A controller (refer to FIG. 3) is included in the device and adapted to determine when the sensing unit 5 detects physical contact and to then cut off power to the display 4.

As illustrated in Fig. 2, when the device 1 is used for telephonic communication, the face of the user 7 is in contact with the speaker unit 6. The sensing unit 5 detects physical contact between the face of the user 7 and the speaker unit 6. At this time, the user cannot view the display 4, so applying power to the display is an unnecessary waste of power consumption. The controller determines that the sensing unit 5 has detected physical contact and cuts off power to the display 4, thereby conserving power.

Unlike the position of the device illustrated in FIG. 1, when the user 7 is not engaged in telephonic communication, for example when engaging in a message service such as e-mail or instant messaging, viewing moving pictures, or playing games, the user holds the device 1 in a position where the display 4 may be viewed and power to the display should not be cut off. The controller will not detect any physical contact between the face of the user 7 and the sensing unit 5 and, therefore, not cut off power to the display 4.

It is contemplated that the sensing unit 5 may detect physical contact between the speaker unit 6 and one or more other portions 8 of the device 1 upon closing the folder portion 2. When the folder portion 2 is closed, the user 7 cannot view the display 4, so supplying power to the display is an unnecessary waste of power consumption. The controller determines that the sensing unit 5 has detected physical contact and cuts off power to the display 4, thereby conserving power.

Although the sensing unit 5 is generally illustrated as having a rectangular shape, it is contemplated that the sensing unit may have any shape that allows physical contact to be detected. Furthermore, although the sensing unit 5 is illustrated as being installed within, or in close proximity to, the speaker unit 6, it is contemplated that the sensing unit may be located anywhere on the folder portion 2 or main body portion 3 that facilitates detecting physical contact when the user is engaged in telephonic communication or when the folder portion is closed. Moreover, it is contemplated that the display 4 may be of any type, preferably an LCD.

The sensing unit 5 may also include a disable switch (refer to FIG. 3) that, when activated, prevents the sensing unit from detecting physical contact. Preferably the disable switch is a manual switch that may be activated by the user in order to apply power to the display 4 and avoid cutting off power to the display when contact may inadvertently be made with the sensing unit 5 when the user 7 in not engaged in telephonic communication and desires to view the display. The user 7 may also utilize the disable switch in order to re-apply power to the display 4 after power has been cut off by the controller upon detection of physical contact by the sensing unit 5.

Referring to FIG. 3, another embodiment of the present invention is illustrated. The apparatus 10 includes a sensing unit 5, a processor 20 and a power controller 30. The apparatus controls application of power to a display 4 in a mobile communication device 1.

The sensing unit 5 is adapted to sense physical contact, for example between a user's face and the speaker of the device. The processor 20 is adapted to determine when the sensing unit detects physical contact and provide a control signal to the power controller 30, which controls the application of power to the display 4.

The sensing unit 5 is located on the device 1 such that it will detect contact when the device is being used for telephonic communication or, in the case of a folder-type device, when the folder portion 2 is closed. It is contemplated that the sensing unit 5 may be located within or near the speaker 6 of the device 1 such that physical contact with the face of a user 7 is detected when the device is used for telephonic communication but no physical contact is detected when the device is being used for functions that enable the user to view the display 4.

The processor 20 receives a signal from the sensing unit 5 indicating that physical contact was detected. The processor then generates the control signal to the power controller 30 to cut off power to the display 4.

The power controller 30 controls the application of power to the display 4 and to other power-consuming devices of the device 1. The power controller 30 is adapted to respond to a control signal from the processor to cut off power to the display 4.

The sensing unit 5 may also include a disable switch 9 that, when activated, prevents the sensing unit from detecting physical contact. Preferably the disable switch 9 is a manual switch that may be activated by the user in order to apply power to the display 4 and avoid cutting off power to the display when contact may inadvertently be made with the sensing unit 5 when the user 7 in not engaged in telephonic communication and desires to view the display. The user 7 may also utilize the disable switch 9 in order to re-apply power to the display 4 after power has been cut off by the controller upon detection of physical contact by the sensing unit 5.

The sensing unit 5 preferably includes a contact sensor. It is contemplated that the contact sensor may be a pneumatic sensor, a piezoelectric sensor, an optical sensor, a very large scale integration (VLSI) sensor, or a mechanical sensor. It is further contemplated that any other touch sensor technologies may be utilized, such as a strange gage method and a method of analyzing a shape of a contact surface using a CCD camera.

Referring to FIG. 4, a typical pneumatic contact sensor 40 is illustrated. Compressed air is injected into a dome type metal sheet 42 of which the pneumatic sensor is constructed. Physical contact generates an external pressure that presses the metal sheet 42, thereby causing an air pressure variation. The pneumatic sensor 40 detects the air pressure variation to determine that physical contact occurred.

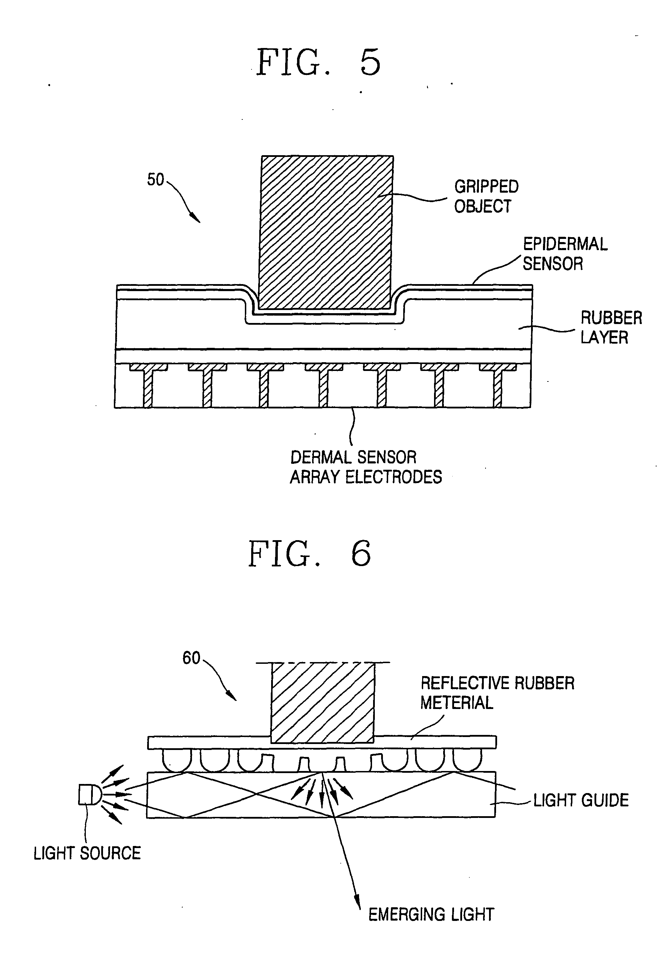

Referring to Fig. 5, a typical piezoelectric contact sensor 50 is illustrated. The production of electric charges by pressing is called a piezoelectric property, which can be utilized to measure a dynamic force or a micro variation of force. The piezoelectric sensor 50 may utilize a piezoelectric polymer.

A piezoelectric material facilitates the construction of an array of touch sensors providing multiple contact points. When pressure is applied to the piezoelectric sensor 50, current flows relative to the size and distribution of dynamic force.

Referring to FIG. 6, an optical contact sensor 60 is illustrated. The basic principle of the optical sensor 60 is the measurement of the variation of a refraction angle of light to determine the size and direction of a contact force. When, for example, a rubber material having a reflective surface is pressed by physical contact, the shape of the rubber changes, thereby varying a refraction angle of light. The optical sensor 60 measures the varied refraction angle to determine that physical contact was made.

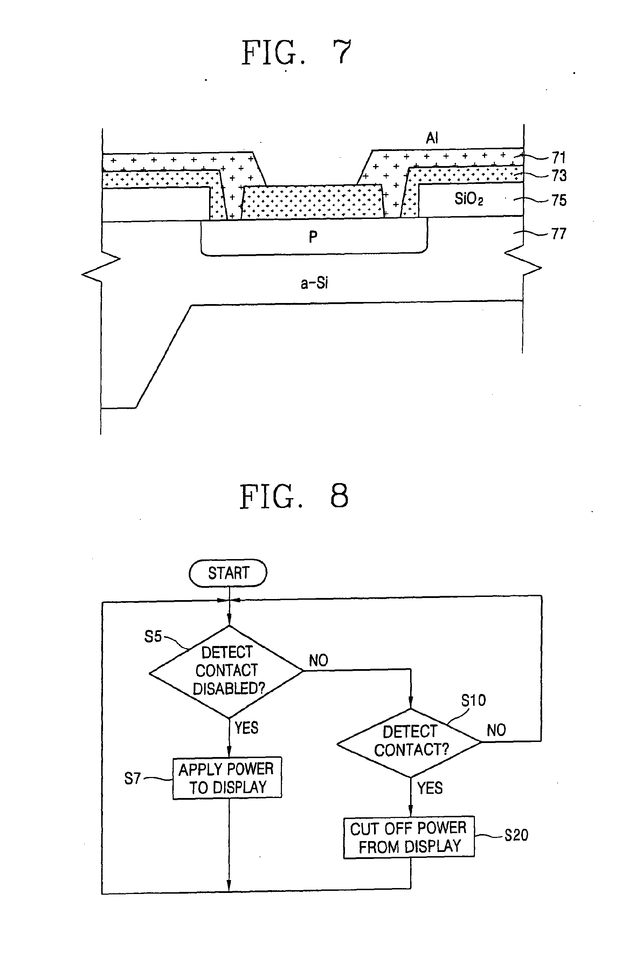

Referring to FIG. 7, a contact sensor 70 using VLSI technology is illustrated. In the contact sensor 70 utilizing VLSI technology, silicon may be used as a sensing material by implementing a complementary metal-oxide-silicon (CMOS) fabrication method. The illustrated VLSI application contact sensor 70 includes four elastic sensing bodies 71, 73, 75, 77. Variation of voltage generated from the four elastic sensing bodies 71, 73, 75, 77 is measured to determine the size of the force when physical contact is made.

Referring to FIG. 8, a method 80 of reducing power consumption of a display unit of a mobile communication device according to the present invention is illustrated. The method 80 includes determining that the display 4 is not visible to the user 7 of the device by detecting physical contact with at least a portion of the device and cutting off power to the display 4.

In step S10, physical contact is detected with a portion of the device. A control signal from the sensing unit 5 may be monitored by the processor 20 to determine if contact was detected.

If contact was detected, either the user 7 is engaging in telephonic communication or, for example, the folder portion of a folder-type device is closed. Either condition indicates that the user 7 cannot view the display 4 and power can be cut off.

In step S20 power is removed from the display 4. The processor 20 may generate a control signal causing the power controller 30 to cut off power to the display 4.

A function to disable the detection of contact may be provided in the mobile communication device. If a disable function is provided, the method 80 includes the determination of whether the disable function is activated in step S5. If the disable function is activated, power is applied to the display in step S7. If the disable function is not activated, the detection of physical contact is performed in step S10.

The apparatus and method of the present invention allow power to be cut off to the display of a mobile communication device when the display is not viewable by the user. Power consumption is reduced, thereby extending the time between necessary power unit recharges. Furthermore, determination that the display is not viewable by the user is accomplished without any discomfort to the user caused by an infrared sensor. Moreover, power may also be cut off, for example, from the display of a folder-type mobile communication device upon closing the folder portion.

The forgoing embodiments and advantages are merely exemplary and are not to be construed as limiting the present invention. The present teachings can be readily applied to other types of apparatuses. For example, the present invention may also be utilized to turn off the display of other devices using battery power such as a smart phone, PDA, LCD-attached headset, and other audio equipment. The description of the present invention is intended to be illustrative, and not to limit the scope of the claims. Many alternatives, modifications, and variations will be apparent to those skilled in the art.

The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

## Claims

1. An apparatus for reducing power consumption in a mobile communication device having a display, the apparatus comprising:
means for determining that the display is not visible to the user of the device; and
means for cutting off power to the display when the determining means determines the display is not visible to the user of the device,
wherein the determining means detects physical contact with at least one portion of the device to determine the display is not visible to the user of the device.

2. The apparatus of claim 1, wherein the determining means comprises a sensing unit.

3. The apparatus of claim 2, wherein the sensing unit is one of a pneumatic sensor, a piezoelectric sensor, an optical sensor, a VLSI sensor, and a mechanical sensor.

4. The apparatus of claim 1, wherein the determining means senses physical contact between the user of the device and the at least one portion of the device.

5. The apparatus of claim 1, wherein the determining means senses physical contact between two or more portions of the device.

6. The apparatus of claim 1, wherein the means for cutting off power comprises a power unit.

7. The apparatus of claim 1, further comprising a processor.

8. The apparatus of claim 1, wherein the determining means detects no physical contact when the display is visible to the user.

9. The apparatus of claim 1, the determining means further comprising a disabling means, wherein the determining means is disabled and does not detect when the display is not visible to the user of the device when the disabling means is activated.

10. The apparatus of claim 9, wherein the disabling means comprises a manual switch that provides power to the display.

11. A mobile communication device, comprising:
a display;
a sensing unit; and
a controller adapted to cut off power to the display when the sensing unit detects that the display is not visible to the user of the device,
wherein the sensing unit is adapted to detect physical contact with at least one portion of the device when the display is not visible to the use of the device.

12. The device of claim 11, wherein the sensing unit comprises a contact sensor.

13. The device of claim 12, wherein the sensing unit is one of a pneumatic sensor, a piezoelectric sensor, an optical sensor, a VLSI sensor, and a mechanical sensor.

14. The device of claim 11, wherein the sensing unit detects physical contact between the user of the device and the at least one portion of the device.

15. The device of claim 11, wherein the sensing unit detects physical contact between two or more portions of the device.

16. The device of claim 11, wherein the device is one of a mobile phone, a smart phone, a PDA, and an LCD-attached headset.

17. The device of claim 11, wherein the device comprises a folder portion and a main body portion.

18. The device of claim 17, wherein the sensing unit is located on the folder portion.

19. The device of claim 11, wherein the sensing unit is located such that no physical contact is detected when the display is visible to the user of the device.

20. The device of claim 11, wherein the display comprises a liquid crystal display.

21. The device of claim 11, the sensing unit further comprising a disable function, wherein the sensing unit is disabled and does not detect physical contact with the at least one portion of the device when the disable function is activated.

22. The device of claim 21, wherein the disable function comprises a manual switch.

23. The device of claim 21, wherein the controller is further adapted to apply power to the display when the disable function is activated.

24. A method for reducing power consumption in a mobile communication device having a display, the method comprising:
determining that the display is not visible to the user of the device by detecting physical contact with at least one portion of the device; and
cutting off power to the display.

25. The method of claim 24, further comprising generating a control signal to cut off power to the display.

26. The method of claim 24, further comprising detecting physical contact between the user of the device and the at least one portion of the device.

27. The method of claim 24, further comprising detecting physical contact between two or more portions of the device.

28. The method of claim 24, further comprising one of sensing an air pressure variation, detecting current flow in a piezoelectric material, measuring the variation of a reflection angle of light, and measuring the variation of a voltage generated in at least one elastic sensing body

29. The method of claim 24, further comprising not detecting physical contact and not cutting off power to the display when the display is visible to the user.

30. The method of claim 24, further comprising not detecting physical contact and not cutting off power to the display when a disable function is activated.

31. The method of claim 30, further comprising applying power to the display when the disable function is activated.
